# EUROPÄISCHE PATENTSCHRIFT

(11) **EP 0 731 305 B1**
(45) Veröffentlichungstag und Bekanntmachung des Hinweises auf die Patenterteilung: **26.04.2000**
(21) Anmeldenummer: 96100145.0
(22) Anmeldetag: 08.01.1996
(51) Int. Cl.: F16K 17/04, F16K 17/168

(54) **Pneumatisches Sicherheitsventil**
Pneumatic safety valve
Vanne de sûreté pneumatique

(30) Priorität: 04.03.1995 DE 29503689 U
(43) Veröffentlichungstag der Anmeldung: 11.09.1996
(73) Patentinhaber: FESTO AG & Co, 73734 Esslingen (DE)
(72) Erfinder: Pikard, Erich, D-73734 Esslingen (DE); Müller, Lothar, D-73734 Esslingen (DE)
(74) Vertreter: Abel, Martin, Dipl.-Ing.

(56) Entgegenhaltungen:
- WO-A-85/02893
- DE-A- 2 758 865
- DE-A- 2 922 060
- DE-A- 3 023 896
- DE-A- 4 011 593
- GB-A- 2 247 735

## Beschreibung

Die Erfindung betrifft ein pneumatisches Sicherheitsventile mit einem Ventilgehäuse mit einem mit einer Druckluftquelle verbindbaren Einlaß und einem mit wenigstens einem Verbraucher verbindbaren Auslaß, mit einem zwischen dem Einlaß und dem Auslaß verlaufenden Versorgungskanal, in den ein Ventilglied eingeschaltet ist, das zwischen einer den Fluiddurchgang durch den Versorgungskanal unterbindenden Schließstellung und wenigstens einer den Fluiddurchgang durch den Versorgungskanal freigebenden Offenstellung bewegbar ist, wobei der einlaßseitige Fluiddruck als das Ventilglied in Schließrichtung beaufschlagender Schließdruck und der auslaßseitige Fluiddruck als das Ventilglied in entgegengesetzter öffnungsrichtung beaufschlagender öffnungsdruck wirkt, derart, daß die zwischen Schließdruck und öffnungsdruck herrschende Druckdifferenz die momentane Stellung des Ventilgliedes beeinflußt, mit einem Rückstellglied, das aus einer unbetätigten in eine betätigte Stellung verlagerbar ist, um das in Schließstellung befindliche Ventilglied in die Offenstellung umzuschalten, und mit einer Reguliereinrichtung zur Voreinstellung der Umschalt-Empfindlichkeit des Ventilgliedes.

Derartige selbstabsperrende Sicherheitsventile werden in die Verbindung zwischen einer Druckluftquelle und einem Verbraucher eingeschaltet, um im Falle eines auslaßseitig auftretenden Lecks eine automatische Unterbindung der Druckluftströmung herbeizuführen. Der Verbraucher, beispielsweise eine pneumatisch angetriebene Maschine, ist häufig über einen Schlauch an den Auslaß des Sicherheitsventils angeschlossen. Der selbsttätige Absperrvorgang verhindert im Defektfalle einen hohen Druckluftverbrauch und vermeidet Verletzungen, die durch peitschende Schlauchabschnitte hervorgerufen werden könnten.

Ein Sicherheitsventil der eingangs genannten Art wird in der GB 2 247 735 A beschrieben. Bei ihm wird der Fluiddurchgang durch den Versorgungskanal von einem kugelförmigen Ventilglied gesteuert. Im Normalfall liegt das Ventilglied unten auf dem Anschlag einer Reguliereinrichtung auf und erlaubt in dieser Offenstellung das Vorbeiströmen der Druckluft. Bei zu hoher Druckdifferenz, verursacht durch einen auslaßseitigen Defekt, wird das Ventilglied vom Sog der Druckluft mitgerissen und in die Schließstellung verlagert. Ist der Defekt behoben, kann das Ventilglied durch das von einem Stößel gebildete Rückstellglied wieder in die geöffnete Ausgangsstellung umgeschaltet werden.

Eine Veränderung des Ansprechverhaltens des Ventilgliedes, also der Umschalt-Empfindlichkeit, ist dadurch möglich, daß der in der Offenstellung zwischen dem Ventilglied und dem diesem zugeordneten Ventilsitz vorhandene Abstand verändert wird. Dies geschieht durch Verstellung des Anschlages, auf dem die Kugel aufsitzt. Je geringer der Abstand ist, desto kleinere Strömungsgeschwindigkeiten reichen aus, um das Ventilglied in die Schließstellung umzuschalten.

Nachteilig bei dem bekannten Sicherheitsventil ist die direkte Abhängigkeit der zugelassenen Durchflußmenge von der eingestellten Umschalt-Empfindlichkeit. Je größer diese Empfindlichkeit ist, desto geringer ist der der Druckluft zur Verfügung stehende Durchflußquerschnitt. Mangels ausreichender Führung des Ventilgliedes ist überdies zu erwarten, daß das bekannte Sicherheitsventil nur in einer ganz bestimmten Ausrichtung betriebssicher arbeitet.

Es ist die Aufgabe der vorliegenden Erfindung, ein pneumatisches Sicherheitsventil der eingangs genannten Art zu schaffen, das unter Gewährleistung guter Durchflußwerte unabhängig von der Einbaulage einen zuverlässigen Betrieb ermöglicht.

Zur Lösung dieser Aufgabe ist vorgesehen, daß die Reguliereinrichtung eine das Ventilglied ständig in Öffnungsrichtung beaufschlagende Federeinrichtung aufweist, die hinsichtlich ihrer Stellkraft variabel einstellbar ist, wobei eine Veränderung der Umschalt-Empfindlichkeit ohne Einfluß auf den maximal möglichen Verstellweg des Ventilgliedes ist und ausschließlich durch eine Veränderung der Stellkraft der Federeinrichtung vorgenommen werden kann, und daß in dem Ventilgehäuse ein Steuerkanal ausgebildet ist, der das in Schließstellung befindliche Ventilglied nach Art eines Bypass-Kanals umgeht und einerseits mit dem einlaßseitigen Kanalabschnitt und andererseits mit dem auslaßseitigen Kanalabschnitt des Versorgungskanals verbunden ist, wobei das Rückstellglied von einem in den Steuerkanal eingeschalteten Verschlußglied gebildet ist, das in unbetätigter Stellung eine den Durchfluß durch den Steuerkanal unterbindende Sperrstellung und in der betätigten Stellung eine den Durchfluß ermöglichende Freigabestellung einnimmt.

Auf diese Weise wirkt eine Federeinrichtung in Richtung der Offenstellung auf das Ventilglied ein und addiert sich zu der vom Öffnungsdruck herrührenden Verstellkraft. Über die Stellkraft der Federeinrichtung läßt sich regulieren, wie groß der Druckabfall am Auslaß sein darf, bis der Durchgang durch den Versorgungskanal abgesperrt wird. Sind an dem Auslaß mehrere Verbraucher angeschlossen, die unterschiedlichen Luftverbräuchen unterliegen, ist der Auslaß einer dauernden Druckschwankung ausgesetzt. Durch entsprechende Reduzierung der Umschalt-Empfindlichkeit läßt sich erreichen, daß der Durchgang durch den Versorgungskanal trotz der Druckschwankangen nicht abgesperrt wird. Ist hingegen nur ein Verbraucher angeschlossen, wobei gravierende Druckschwankungen einen Defekt anzeigen, so kann durch Einstellung einer höheren Umschalt-Empfindlichkeit ein erheblich rascheres Verschließen des Luftdurchganges herbeigeführt werden. Da sich der jeweils eingestellte Wert der Umschalt-Empfindlichkeit nicht auf den maximal möglichen Hub des Ventilgliedes auswirkt, kann auch bei hoher Umschalt-Empfindlichkeit eine ausreichende Durchflußmenge zur Verfügung gestellt werden. Letztlich ermöglicht die Federeinrichtung einen Betrieb des Sicherheitsventils in verschiedenen Lagen, ohne den eingestellten Empfindlichkeitswert nennenswert zu beeinflussen.

In dem Ventilgehäuse ist ein Steuerkanal ausgebildet, der das Ventilglied bypass-artig umgeht und den Einlaß mit dem Auslaß verbindet, wobei in den Steuerkanal ein das Rückstellglied bildendes Verschlußglied eingeschaltet ist, das in unbetätigter Stellung eine den Durchfluß durch den Steuerkanal unterbindende Sperrstellung und in der betätigten Stellung eine den Durchfluß ermöglichende Freigabestellung einnimmt. Nach dem Erstanschluß des Sicherheitsventils befindet sich das Ventilglied regelmäßig in der Schließstellung. Durch kurzzeitiges Umschalten des Verschlußgliedes in die Freigabestellung gelangt Druckluft über den Steuerkanal zum Auslaß, wo sich nach kurzer Zeit annähernd der gleiche Druck wie am Einlaß aufbauen kann, so daß das Ventilglied in die Offenstellung umschaltet.

Aus der DE-A-3 023 896 geht bereits ein hydraulisches Sicherheitsventil hervor, dessen Charakteristik durch Veränderung der Vorspannkraft einer auf ein Ventilglied einwirkenden Feder einstellbar ist. Allerdings ist dieses Sicherheitsventil so ausgelegt, daß es die Fluidströmung unterbricht, wenn der einlaßseitige Druck zu stark ansteigt. Ein das Ventilglied bypass-artig umgehender Steuerkanal ist nicht vorhanden.

Zusätzlich zu der in Öffnungsrichtung wirkenden ersten Federeinrichtung kann eine in Schließrichtung auf das Ventilglied einwirkende zweite Federeinrichtung vorhanden sein, deren Stellkraft zweckmäßigerweise geringer ist als diejenige der ersten Federeinrichtung. Auf diese Weise ist das Ventilglied in jeder Stellung zwischen zwei Federeinrichtungen axial beweglich aufgehängt.

Vorzugsweise befindet sich das Ventilglied in einer Aufnahmekammer des Ventilgehäuses und unterteilt diese in einen mit dem Einlaß verbundenen Zuströmabschnitt und einen mit dem Auslaß verbundenen Abströmabschnitt. Die Mündung des Einlasses in den Zuströmabschnitt ist dabei vorzugsweise axial gerichtet, jedenfalls derart, daß die Druckluft das Ventilglied umströmen muß, um in den Abströmabschnitt zu gelangen.

Nachfolgend wird die Erfindung anhand der beiliegenden Zeichnung näher erläutert. Es zeigen im einzelnen:
- Fig. 1: einen Querschnitt durch eine erste Ausführungsform des erfindungsgemäßen Sicherheitsventils im Schnitt gemäß Schnittlinie I-I aus Fig. 2,
- Fig. 2: das Sicherheitsventil aus Fig. 1 in einem dazu rechtwinkeligen Schnitt entsprechend Schnittlinie II-II aus Fig. 3 und
- Fig. 3: eine Draufsicht auf das Sicherheitsventil der Fig. 1 und 2 mit Blickrichtung gemäß Pfeil III aus Fig. 1.

Das pneumatische Sicherheitsventil des Ausführungsbeispiels besitzt ein im wesentlichen quaderförmiges Ventilgehäuse 1. Es ist von einem abgewinkelten Versorgungskanal 4 durchsetzt, der sich einenends mit einem Einlaß P und andernends mit einem Auslaß A zu zwei unterschiedlichen Außenflächen 2, 2' des Ventilgehäuses 1 öffnet. Sowohl der Einlaß P als auch der Auslaß A sind mit einem Innengewinde 3 versehen, das den Anschluß nicht näher dargestellter Druckmittelleitungen ermöglicht. Auf diese Weise kann der Einlaß P mit einer Druckluftquelle und der Auslaß A mit einem oder mehreren Verbrauchern verbunden werden. Die Verbindung zwischen dem Auslaß A und dem jeweiligen Verbraucher geschieht regelmäßig über eine schlauchartige Druckmittelleitung.

Bevorzugt der sich an den Einlaß P anschließende Abschnitt des Versorgungskanals 4 ist als Aufnahmekammer 5 für ein Ventilglied 6 ausgebildet. Letzteres ist axial beweglich in der Aufnahmekammer 5 aufgenommen und unterteilt diese axial in einen mit dem Einlaß P verbundenen Zuströmabschnitt 7 und einen mit dem Auslaß A verbundenen Abströmabschnitt 8. Die Volumina dieser Abschnitte 7, 8 sind veränderlich und hängen von der jeweiligen Axialposition des Ventilgliedes 6 ab.

In der Zeichnung ist das Ventilglied 6 in durchgezogenen Linien in einer Schließstellung gezeigt. In dieser unterbindet es den Fluiddurchgang vom Einlaß P zum Auslaß A. Dies geschieht dadurch, daß es die axial ausgerichtete auslaßseitige Öffnung 12 des Abströmabschnittes 8 überdeckt, wobei es an einem diese auslaßseitige Öffnung 12 umgebenden Ventilsitz 13 aufsitzt. Dieser ist beispielsgemäß von einem ringförmigen axialen Wandabschnitt der Aufnahmekammer 5 gebildet. Das Ventilglied 6 ist im wesentlichen scheibenförmig ausgebildet, wobei sein Durchmesser etwas geringer ist als derjenige der Aufnahmekammer 5, so daß es ein Sitzventilglied bildet, das in Schließstellung auf dem Ventilsitz 13 ruht. Im Kontaktbereich kann am Ventilsitz 13 und/oder am Ventilglied 6 eine nicht näher dargestellte Dichtung vorgesehen sein.

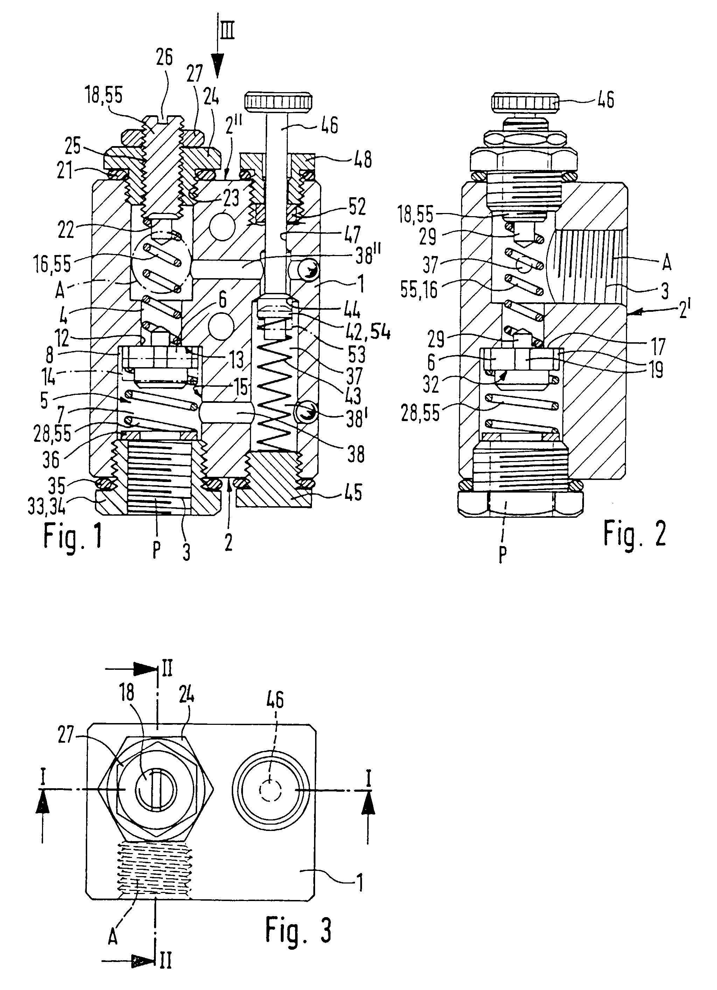

Ist das Ventilglied 6 vom Ventilsitz 13 mehr oder weniger weit abgehoben, nimmt es Offenstellungen ein, von denen in Fig. 1 eine bei 14 strichpunktiert angedeutet ist. In diesen Offenstellungen kann die über den Einlaß P zugeführte Druckluft an dem Ventilglied 6 außen vorbeiströmen, so daß sie in den Zuströmabschnitt 7 und von dort durch die auslaßseitige Öffnung 12 hindurch zum Auslaß A strömen kann. Indem der Querschnitt des Ventilgliedes 6 im wesentlichen an denjenigen der Aufnahmekammer 5 angepaßt ist, wird das Ventilglied 6 bei seinen Bewegungen stets von der umfangsseitigen Wand 15 der Aufnahmekammer 5 geführt. Damit die Druckluft vorbeiströmen kann, verfügt das Ventilglied 6 im Bereich seines Außenumfanges über mehrere in Umfangsrichtung verteilt angeordnete Strömungsnuten 19, die axial durchgehen, d. h. zu beiden Stirnseiten des Ventilgliedes 6 offen sind. Sie bilden mit der umfangsseitigen Wand 15 Strömungskanäle für die Druckluft. Da sie so angeordnet sind, daß ihre dem Zuströmabschnitt 7 zugewandten axialen Öffnungen bei in Schließstellung befindlichem Ventilglied 6 radial außerhalb der auslaßseitigen öffnung 12 liegen, ist sichergestellt, daß ein Hindurchströmen in der Schließstellung des Ventilgliedes 6 unmöglich ist.

Im Betrieb wird das Ventilglied 6 axial von beiden Seiten her durch einen Fluiddruck beaufschlagt. Der einlaßseitige Fluiddruck sei als Schließdruck bezeichnet, da er das Ventilglied 6 in Richtung der Schließstellung beaufschlagt. Der auslaßseitige Fluiddruck sei als öffnungsdruck bezeichnet, da er das Ventilglied 6 im öffnungssinne beaufschlagt.

Auf das Ventilglied 6 wirkt in Öffnungsrichtung ferner eine erste Federeinrichtung 16 ein. Sie ist beispielsgemäß von einer Schraubendruckfeder gebildet, die sich mit ihrem einen Ende an der auslaßseitigen axialen Ventilgliedfläche 17 und mit ihrem anderen Ende an einem ventilgehäusefest verankerten Stellglied 18 abstützt. Sowohl an der auslaßseitigen Ventilgliedfläche 17 als auch an der zugewandten Stirnfläche 22 des Stellgliedes 18 ist jeweils ein Zentrierfortsatz 29 vorgesehen, der in die erste Federeinrichtung 16 hineinragt und diese an Ort und Stelle fixiert.

Das Stellglied 18, die erste Federeinrichtung 16 und das Ventilglied 6 sind koaxial zueinander ausgerichtet. Das Stellglied 18 sitzt in einer Gehäusebohrung 23, die sich im Bereich des rechtwinkelig abgehenden Auslasses A in Verlängerung an den Versorgungskanal 4 anschließt.

Das Stellglied 18 ist axial verstellbar an dem Ventilgehäuse 1 gelagert. Hierzu ist es vorzugsweise als Stellschraube ausgebildet, die sich durch Drehen je nach Drehrichtung in der einen oder anderen axialen Richtung relativ zum Ventilgehäuse 1 und zum Ventilsitz 13 verlagert.

Das Stellglied 18 kann wie abgebildet in einer Hohlschraube 24 verstellbar gelagert sein, die in die Gehäusebohrung 23 eingeschraubt ist. Zwischen der Hohlschraube 24 und der zugeordneten Außenfläche 2'' des Ventilgehäuses 1 befindet sich zweckmäßigerweise ein Dichtring 21. Diese Außenfläche 2'', zu der die Gehäusebohrung 23 hin offen ist, ist entgegengesetzt zu der Außenfläche 2 angeordnet, an der der Einlaß P vorgesehen ist.

Das Stellglied 18 steht über ein beispielsgemäß als Außengewinde ausgebildetes Gewinde 25 in Gewindeeingriff mit einem komplementären Innengewinde der Durchbrechung der Hohlschraube 24. Am seiner außen liegenden Stirnseite ist eine Angriffspartie 26 für ein Schraubwerkzeug, beispielsweise einen Schraubenzieher, vorgesehen. Die jeweils eingestellte Axialposition des Stellgliedes 18 läßt sich lösbar mit Hilfe eines Sicherungselementes 27 fixieren, das vorliegend von einer Kontermutter gebildet ist.

Eine zweite Federeinrichtung 28 wirkt ebenfalls ständig auf das Ventilglied 6 ein, allerdings entgegen der ersten Federeinrichtung 16 in Schließrichtung. Das Ventilglied 6 ist vorzugsweise koaxial zwischen den beiden Federeinrichtungen 16, 28 eingespannt. Die zweite Federeinrichtung 28 ist ebenfalls von einer Schraubendruckfeder gebildet, die sich mit ihrem einen Ende an der axial gerichteten einlaßseitigen Ventilgliedfläche 32 und andererseits an einem gehäusefesten Anschlag 33 abstützt. Dieser bildet die dem Ventilsitz 13 entgegengesetzte axiale Begrenzungswand der Aufnahmekammer 5 und ist beispielsgemäß von einem Schraubglied 34 gebildet, das in das zugeordnete Ende des Versorgungskanals 4 unter Zwischenschaltung eines Dichtringes 35 eingeschraubt ist. Dieses Schraubglied 34 besitzt eine axial durchgehende Durchbrechung, die den Einlaß P bildet. Zwischen die zweite Federeinrichtung 28 und den Anschlag 33 kann noch eine gelochte Scheibe 36 zwischengefügt sein.

Somit befindet sich die zweite Federeinrichtung 28 im Zuströmabschnitt 7 der Aufnahmekammer 5, und zwar in jedweder Stellung des Ventilgliedes 6. Die erste Federeinrichtung 16 befindet sich in Schließstellung des Ventilgliedes 6 gesehen auslaßseitig außerhalb der Aufnahmekammer 5, ragt jedoch in den Offenstellungen je nach Abstand des Ventilgliedes 6 vom Ventilsitz 13 stirnseitig mehr oder weniger weit in die Aufnahmekammer 5 hinein.

In dem Ventilgehäuse 1 verläuft ferner ein Steuerkanal 37, der sich beispielsgemäß aus drei sich zu einem U-ähnlichen Verlauf ergänzenden Kanalabschnitten 38, 38', 38'' zusammensetzt. Es handelt sich bei ihm um einen Bypass-Kanal, der unter Umgehung des Ventilsitzes 13 bzw. des in Schließstellung befindlichen Ventilgliedes 6 eine Verbindung zwischen einem einlaßseitigen und einem auslaßseitigen Abschnitt des Versorgungskanals 4 herstellt. Die beiden endseitigen Kanalabschnitte 38, 38'' des Steuerkanals 37 verlaufen im rechten Winkel zu dem die beiden Federeinrichtungen 16, 28 aufnehmenden Abschnitt des Versorgungskanals 4, der mittlere Kanalabschnitt 38' des Steuerkanals 37 verläuft parallel zu diesem Kanalabschnitt des Versorgungskanals 4.

Der Fluiddurchgang durch den Steuerkanal 37 ist steuerbar. Zu diesem Zweck ist in dem Steuerkanal 37 ein wiederum als Sitzglied ausgebildetes Verschlußglied 42 angeordnet, das von einer Rückstellfeder 43 in eine aus Fig. 1 ersichtliche Sperrstellung vorgespannt ist, in der der Fluiddurchgang durch den Steuerkanal 37 versperrt ist. Das Verschlußglied 42 liegt hier an einem z.B. konisch ausgebildeten gehäusefesten Ventilsitz 44 an. Die Rückstellfeder 43 kann im mittleren Kanalabschnitt 38' des Steuerkanals 37 angeordnet sein, wobei sie sich einenends an dem Verschlußglied 42 abstützt und andernends gegen einen Stopfen 45 arbeitet, der in einen sich an den mittleren Kanalabschnitt 38' anschließenden und zur unteren Außenfläche 2 ausmündenden Abschnitt des Steuerkanals 37 abgedichtet eingeschraubt ist.

Der einlaßseitige Kanalabschnitt 38 des Steuerkanals 37 mündet im Bereich der umfangsseitigen Wand 15 in den Zuströmabschnitt 7 der Aufnahrnekammer 5. Auf diese Weise steht der das Verschlußglied 42 aufnehmende mittlere Kanalabschnitt 38' des Steuerkanals 37 ständig unter dem Druck der einlaßseitig anliegenden Druckluft und das Verschlußglied 42 wird durch diese, zusätzlich zu der Kraft der Rückstellfeder 43, in die Sperrstellung gedrückt.

An dem Verschlußglied 42 greift ein aus dem Ventilgehäuse 1 herausragender Betätigungsstößel 46 an. Beide Teile sind zweckmäßigerweise ein integrales Bauteil. Der Betätigungsstößel 46 schließt sich vorzugsweise auslaßseitig an das Verschlußglied 42 an, wobei es in koaxialer Verlängerung zu der Rückstellfeder 43 verläuft, die ihrerseits eine Schraubendruckfeder ist. Dabei durchsetzt der Betätigungsstößel 46 eine gehäuseseitige Führungsbohrung 47 und einen gegebenenfalls gehäuseseitig verankerten Führungseinsatz 48. Letzterer ist beispielsgemäß eine abgedichtet verankerte Schraube mit einer vom Betätigungsstößel 46 durchsetzten Durchbrechung, wobei diese Schraube gleichzeitig zur Halterung eines vom Betätigungsstößel 46 durchsetzten Dichtringes 52 dient, der den Betätigungsstößel 46 gegenüber dem Ventilgehäuse 1 abdichtet.

Durch Ausüben einer insbesondere manuell erzeugten Druckkraft auf das außerhalb des Ventilgehäuses 1 angeordnete Ende des Betätigungsstößels 46 verlagert sich dieser nach innen, wobei die Rückstellfeder 43 komprimiert wird und das Verschlußglied 42 vom Ventilsitz 44 abhebt und in eine strichpunktiert angedeutete Freigabestellung 53 gelangt. In dieser ist ein Durchfluß der Druckluft durch den Steuerkanal 37 hindurch möglich.

Die beiden Federeinrichtungen 16, 28 bilden zusammen mit dem axial justierbaren Stellglied 18 eine Reguliereinrichtung 55 zur bedarfsgemäßen Voreinstellung der Umschalt-Empfindlichkeit des Ventilgliedes 6 in bezug auf den Umschaltvorgang aus der Offenstellung in die Schließstellung. Das Verschlußglied 42 ist zugleich ein Rückstellglied 54, das in unbetätigter Stellung die Sperrstellung und in einer betätigten Stellung die Freigabestellung einnimmt. Durch kurzzeitiges Umschalten in die Freigabestellung kann das Ventilglied 6 dazu veranlaßt werden, aus der Schließstellung in die Offenstellung zurückzukehren.

Unter Bezugnahme auf vorteilhafte Abstimmungs- und Einstellmaßnahmen wird nun die Funktionsweise des beispielsgemäßen pneumatischen Sicherheitsventils erläutert.

Vor der Inbetriebnahme des Sicherheitsventils sind sowohl der Einlaß P als auch der Auslaß A drucklos. Die beiden Federeinrichtungen 16, 28 sind so ausgelegt, daß in der Schließstellung des Ventilglieds 6 die auf dieses ausgeübte Öffnungs-Stellkraft der ersten Federeinrichtung 16 größer ist als die in entgegengesetzter Richtung auf das Ventilglied 6 einwirkende Schließ-Stellkraft der zweiten Federeinrichtung 28. Da alle Kanäle drucklos sind, wirkt keine zusätzliche Fluid-Druckkraft, so daß das Ventilglied 6 eine Offenstellung 14 einnimmt, in der sich die Stellkräfte der beiden mechanischen Federeinrichtungen 16, 28 im Gleichgewicht befinden. Die Rückstellfeder 43 ist so ausgelegt, daß sie das Verschlußglied 42 bei drucklosen Kanälen in der Sperrstellung hält.

Das Sicherheitsventil wird nun in Betrieb gesetzt, indem an den Einlaß P eine Druckmittelquelle angeschlossen wird. Der anstehende Fluiddruck wirkt sofort axial frontal auf die einlaßseitige Ventilgliedfläche 32 und unterstützt mit seiner fluidischen Druckkraft die Schließ-Stellkraft, so daß sich das Ventilglied 6 schlagartig in die Schließstellung verlagert. Ein Ausströmen von Druckluft über den Auslaß A ist nicht möglich, da sowohl der Versorgungskanal 4 als auch der Steuerkanal 37 abgesperrt sind. Der Auslaß A bleibt drucklos.

Anschließend, oder auch schon vorher, wird an den Auslaß A ein Verbraucher angeschlossen. Es kann sich beispielsweise um einen Druckluftschrauber oder eine beliebige andere Maschine handeln. Auch ein gleichzeitiger Anschluß mehrerer pneumatisch betätigter Maschinen ist möglich.

Ist der Anschlußvorgang beendet, wird der Betätigungsstößel 46 gedrückt. Dadurch verlagert sich das Verschlußglied 42 entgegen der Druckkraft der Rückstellfeder 43 in die Freigabestellung, die es so lange einnimmt, wie der Betätigungsstößel 46 gedrückt gehalten wird.

Die Druckluft kann nun vom Einlaß P über den offenen Steuerkanal 37 zum Auslaß strömen, wo sich nach kurzer Zeit, nachdem sich die angeschlossenen Druckmittelleitungen gefüllt haben, zumindest annähernd der gleiche Fluiddruck einstellt wie am Auslaß P.

Das Ventilglied 6 wird nun von beiden Seiten durch eine Kombination einer fluidischen Druckkraft mit einer mechanischen Federstellkraft beaufschlagt. Die Abstimmung ist so getroffen, daß die in Öffnungsrichtung wirkenden Kräfte überwiegen, so daß das Ventilglied 6 in die Offenstellung umschaltet.

Bei der Auslegung ist zu berücksichtigen, daß beim Ausführungsbeispiel die in Schließstellung des Ventilgliedes 6 dem Öffnungsdruck ausgesetzte Ventilgliedfläche geringer ist als die dem Schließdruck ausgesetzte. Sobald jedoch das Ventilglied vom Ventilsitz 13 abgehoben ist, sind die beidseitigen Druckbeaufschlagungsflächen gleich groß. Daher sollte, wie schon erwähnt, die Stellkraft der ersten Federeinrichtung 16 größer sein als diejenige der zweiten Federeinrichtung 28. Durch Abstimmung der herrschenden Federkräfte und der in Schließstellung und in Offenstellung wirksamen Druckbeaufschlagungsflächen läßt sich das Betriebsverhalten des Sicherheitsventils den Erfordernissen anpassen.

Das Ventilglied 6 befindet sich nun in Offenstellung in einem Kräftegleichgewicht, wobei die Druckluft vom Einlaß P über die Strömungsnuten 19 am Ventilglied 6 vorbei, durch die auslaßseitige Öffnung 12 hindurch, zum Auslaß A strömen kann. Sobald das Ventilglied 6 die Offenstellung eingenommen hat, kann der Betätigungsstößel 46 losgelassen werden, so daß sich das Verschlußglied 42 mit Hilfe der Rückstellfeder 43 in die Sperrstellung zurückbewegt.

Sollte an den an den Auslaß A angeschlossenen Maschinen oder den Verbindungsleitungen ein Defekt auftreten, der mit einer Druckluft-Leckage verbunden ist, führt dies zu einem Druckabfall am Auslaß A. Er ist dann besonders groß, wenn eine angeschlossene Druckmittelleitung platzt. Dies führt zu einer Reduktion des Öffnungsdruckes, so daß die in Schließrichtung auf das Ventilglied 6 einwirkenden Kräfte überwiegen und das Ventilglied 6 in die Schließstellung stellung umschalten. Ein weiteres Ausströmen von Druckluft wird so verhindert. Ist der Schaden repariert, läßt sich das Ventilglied 6 in der bereits erwähnten Weise durch Betätigen des Verschlußgliedes 42 fluidgesteuert in die Offenstellung zurückverlagern.

Am Auslaß A kann es während des Betriebes angeschlossener Verbraucher zu Druckschwankungen kommen, die nicht defektbedingt sind. In einem solchen Falle muß ein Absperren des Fluiddurchganges durch den Versorgungskanal 4 verhindert werden, um den Betrieb der Verbraucher nicht zu beeinträchtigen.

Um diesen Gegebenheiten Rechnung zu tragen, läßt sich die in Öffnungsrichtung auf das Ventilglied 6 einwirkende Stellkraft der ersten Federeinrichtung 16 variabel einstellen. Je nach Einschraubtiefe des Stellgliedes 18 ergibt sich ein mehr oder weniger großer Abstand zwischen dem in Schließstellung befindlichen Ventilglied 6 und der auf die erste Federeinrichtung 16 einwirkenden Stirnfläche 22, woraus unterschiedliche, in Schließstellung auf das Ventilglied 6 einwirkende Stellkräfte resultieren. Soll das Sicherheitsventil bereits bei geringem Druckabfall am Auslaß A sperren, wählt man eine geringere Vorspannung der ersten Federeinrichtung 16, indem man das Stellglied 18 weiter herausschraubt. Soll die Umschalt-Empfindlichkeit geringer ausfallen, spannt man die erste Federeinrichtung 16 stärker vor, indem man das Stellglied 18 weiter axial in das Ventilgehäuse 1 einschraubt.

Von Vorteil bei dieser Einstellung der Umschalt-Empfindlichkeit ist, daß der dem Ventilglied 6 in der Aufnahmekammer 5 zur Verfügung stehende Verstellweg nicht beeinflußt wird. Dieser ist stets der gleiche. Die durch den Versorgungskanal 4 strömende Luftmenge wird demnach vom voreingestellten Umschalt-Empfindlichkeitswert nicht oder nur untergeordnet beeinflußt, auch bei empfindlichem Ansprechverhalten können große Luftmengen hindurchströmen.

Indem das Ventilglied 6 durch Federeinrichtungen in seiner jeweiligen Lage fixiert wird, wirkt sich sein Eigengewicht nur untergeordnet auf das Schaltverhalten aus. Das Sicherheitsventil läßt sich deshalb in beliebiger Lage einsetzen.

## Patentansprüche

1. Pneumatisches Sicherheitsventil, mit einem Ventilgehäuse (1) mit einem mit einer Druckluftquelle verbindbaren Einlaß (P) und einem mit wenigstens einem Verbraucher verbindbaren Auslaß (A), mit einem zwischen dem Einlaß (P) und dem Auslaß (A) verlaufenden Versorgungskanal (4), in den ein Ventilglied (6) eingeschaltet ist, das zwischen einer den Fluiddurchgang durch den Versorgungskanal (4) unterbindenden Schließstellung und wenigstens einer den Fluiddurchgang durch den Versorgungskanal (4) freigebenden Offenstellung bewegbar ist, wobei der einlaßseitige Fluiddruck als das Ventilglied (6) in Schließrichtung beaufschlagender Schließdruck und der auslaßseitige Fluiddruck als das Ventilglied (6) in entgegengesetzter Öffnungsrichtung beaufschlagender Öffnungsdruck wirkt, derart, daß die zwischen Schließdruck und Öffnungsdruck herrschende Druckdifferenz die momentane Stellung des Ventilgliedes (6) beeinflußt, mit einem Rückstellglied (54), das aus einer unbetätigten in eine betätigte Stellung verlagerbar ist, um das in Schließstellung befindliche Ventilglied (6) in die Offenstellung umzuschalten, und mit einer Reguliereinrichtung (55) zur Voreinstellung der Umschalt-Empfindlichkeit des Ventilgliedes (6), dadurch gekennzeichnet, daß die Reguliereinrichtung (55) eine das Ventilglied (6) ständig in Öffnungsrichtung beaufschlagende Federeinrichtung (16) aufweist, die hinsichtlich ihrer Stellkraft variabel einstellbar ist, wobei eine Veränderung der Umschalt-Empfindlichkeit ohne Einfluß auf den maximal möglichen Verstellweg des Ventilgliedes (6) ist und ausschließlich durch eine Veränderung der Stellkraft der Federeinrichtung (16) vorgenommen werden kann, und daß in dem Ventilgehäuse (1) ein Steuerkanal (37) ausgebildet ist, der das in Schließstellung befindliche Ventilglied (6) nach Art eines Bypass-Kanals umgeht und einerseits mit dem einlaßseitigen Kanalabschnitt und andererseits mit dem auslaßseitigen Kanalabschnitt des Versorgungskanals (4) verbunden ist, wobei das Rückstellglied (54) von einem in den Steuerkanal (37) eingeschalteten Verschlußglied (42) gebildet ist, das in unbetätigter Stellung eine den Durchfluß durch den Steuerkanal (37) unterbindende Sperrstellung und in der betätigten Stellung eine den Durchfluß ermöglichende Freigabestellung einnimmt.

2. Sicherheitsventil nach Anspruch 1, dadurch gekennzeichnet, daß die Federeinrichtung (16) zwischen dem Ventilgehäuse (6) und einem relativ zum Ventilgehäuse (1) verstellbaren Stellglied (18) arbeitet, wobei je nach Stellung des Stellgliedes (18) verschiedene Vorspannungen des Ventilgliedes (6) vorgegeben werden.

3. Sicherheitsventil nach Anspruch 2, dadurch gekennzeichnet, daß das Stellglied (18) eine Stellschraube ist.

4. Sicherheitsventil nach einem der Ansprüche 1 bis 3, dadurch gekennzeichnet, daß die Federeinrichtung (16) von wenigstens einer Schraubendruckfeder gebildet ist.

5. Sicherheitsventil nach einem der Ansprüche 1 bis 4, dadurch gekennzeichnet, daß die Reguliereinrichtung (55) zusätzlich zu der in Öffnungsrichtung wirkenden ersten Federeinrichtung (16) eine das Ventilglied (6) ständig in Schließrichtung beaufschlagende zweite Federeinrichtung (28) aufweist.

6. Sicherheitsventil nach Anspruch 5, dadurch gekennzeichnet, daß sich die zweite Federeinrichtung (28) zwischen dem Ventilglied (6) und einem in das Ventilgehäuse (1) eingeschraubten Schraubglied (34) abstützt, wobei das Schraubglied (34) einen Durchgangskanal aufweist, der den Einlaß (P) bildet.

7. Sicherheitsventil nach Anspruch 5 oder 6, dadurch gekennzeichnet, daß das Ventilglied (6) koaxial zwischen den beiden Federeinrichtungen (16, 28) eingespannt ist.

8. Sicherheitsventil nach einem der Ansprüche 5 bis 7, dadurch gekennzeichnet, daß die Öffnungs-Stellkraft der ersten Federeinrichtung (16) größer ist als die Schließ-Stellkraft der zweiten Federeinrichtung (28) .

9. Sicherheitsventil nach einem der Ansprüche 1 bis 8, dadurch gekennzeichnet, daß das Ventilglied (6) axial beweglich in einer in dem Versorgungskanal (4) ausgebildeten Aufnahmekammer (5) angeordnet ist und diese axial in einen mit dem Einlaß (P) verbundenen Zuströmabschnitt (7) und einen mit dem Auslaß (A) verbundenen Abströmabschnitt (8) unterteilt.

10. Sicherheitsventil nach einem der Ansprüche 1 bis 9, dadurch gekennzeichnet, daß das Verschlußglied (42) durch eine Federeinrichtung (43) in die Sperrstellung vorgespannt ist.

11. Sicherheitsventil nach einem der Ansprüche 1 bis 10, dadurch gekennzeichnet, daß an dem Verschlußglied (42) ein aus dem Ventilgehäuse (1) herausragender Bestätigungsstößel (46) angreift.

12. Sicherheitsventil nach einem der Ansprüche 1 bis 11, dadurch gekennzeichnet, daß das Ventilglied (6) ein Sitzventilglied ist.

13. Sicherheitsventil nach einem der Ansprüche 1 bis 12, dadurch gekennzeichnet, daß am Außenumfang des Ventilgliedes (6) axial durchgehende Strömungsnuten (19) vorgesehen sind, durch die die Druckluft bei geöffnetem Ventilglied (6) an diesem vorbeiströmt.

## Claims

1. Pneumatic safety valve, with a valve housing (1) with an inlet (P) connectable to a compressed air source, and an outlet (A) connectable to one or more loads, with a feed passage (4) running between the inlet (P) and the outlet (A), in which is inserted a valve member (6) which is movable between a closed position preventing the passage of fluid through the feed passage (4) and one or more open positions allowing the passage of fluid through the feed passage (4), wherein the fluid pressure on the inlet side acts as closing pressure forcing the valve member (6) in the closing direction, and the fluid pressure on the inlet side acts as opening pressure forcing the valve member (6) in the opposite opening direction, such that the prevailing pressure difference between closing pressure and opening pressure influences the momentary position of the valve member (6), and with a resetting element (54) which is movable from an unactuated into an actuated position, in order to switch the valve member (6) from the closed to the open position, and with a regulating device (55) for presetting the changeover sensitivity of the valve member (6), characterised in that the regulating device (55) has a spring element (16) pressing the valve member (6) constantly in the opening direction and which is variably adjustable in terms of its operating force, wherein any variation in changeover sensitivity has no effect on the maximum possible travel of the valve member (6) and may be effected only by changing the operating force of the spring element (16), and that the valve housing (1) contains a control passage (37) which by-passes the valve member (6) in the closed position in the manner of a by-pass duct and is connected at one end to the inlet-side passage section and at the other end to the outlet-side passage section of the feed passage (4), wherein the resetting element (54) is formed by a sealing member (42) inserted in the control passage (37) which assumes in the non-actuated position a blocking position preventing flow through the control passage (37), and in the actuated position a release position allowing flow to take place.

2. Safety valve according to claim 1, characterized in that the spring element (16) operates between the valve member (6) and a control element (18) which is adjustable relative to the valve housing (1), wherein different preloadings of the valve member (6) are preset according to the position of the control element (18).

3. Safety valve according to claim 2, characterized in that the control element (18) is an adjusting screw.

4. Safety valve according to any of claims 1 to 3, characterized in that the spring element (16) is formed substantially by a helical compression spring.

5. Safety valve according to any of claims 1 to 4, characterized in that the regulating device (55), in addition to the first spring element (16) acting in the opening direction , also has a second spring element (28) constantly pressing the valve member (6) in the closing direction.

6. Safety valve according to claim 5, characterized in that the second spring element (28) rests between the valve member (6) and a screwed element (34) screwed into the valve housing (1), wherein the screwed element (34) has a through passage which forms the inlet (P).

7. Safety valve according to claim 5 or 6, characterized in that the valve member (6) is mounted coaxially between the two spring elements (16, 28).

8. Safety valve according to any of claims 5 to 7, characterized in that the opening actuating force of the first spring element (16) is greater than the closing actuating force of the second spring element (28).

9. Safety valve according to any of claims 1 to 8, characterized in that the valve member (6) is mounted with axial movement facility in a mounting chamber (5) formed in the feed passage (4), dividing it axially into an inflow section (7) connected to the inlet (P) and an outflow section (8) connected to the outlet (A).

10. Safety valve according to any of claims I to 9, characterized in that the sealing member (42) is prestressed into the closed position by a spring element (43).

11. Safety valve according to any of claims 1 to 10, characterized in that an actuating ram (46) extending from the valve housing (1) acts on the sealing member (42).

12. Safety valve according to any of claims 1 to 11, characterized in that the valve member (6) is a seated valve member.

13. Safety valve according to any of claims 1 to 12, characterized in that continuous axial flow channels (19) are provided on the outer periphery of the valve member (6), through which the compressed air flows past the open valve member (6).

## Revendications

1. Soupape de sûreté pneumatique, comportant un boîtier de soupape (1) avec une admission (P) pouvant être reliée à une source d'air comprimé et une sortie (A) pouvant être reliée à au moins un utilisateur, comportant un canal d'alimentation (4) s'étendant entre l'admission (P) et la sortie (A), canal dans lequel est monté un élément de soupape (6) qui est mobile entre une position fermée interdisant le passage du fluide à travers le canal d'alimentation (4) et au moins une position ouverte libérant le passage du fluide à travers le canal d'alimentation (4), la pression du fluide côté admission agissant en tant que pression de fermeture exposant l'élément de soupape (6) dans la direction de fermeture et la pression du fluide côté sortie agissant en tant que pression d'ouverture exposant l'élément de soupape (6) dans la direction opposée d'ouverture, de telle manière que la différence de pression entre pression de fermeture et pression d'ouverture influence la position instantanée de l'élément de soupape (6), comportant un élément de rappel (54) qui peut être déplacé d'une position non actionnée à une position actionnée, afin de ramener dans la position ouverte l'élément de soupape (6) se trouvant dans la position fermée, et comportant un dispositif de régulation (55) pour prérégler la sensibilité d'inversion de l'élément de soupape (6), caractérisée en ce que le dispositif de régulation (55) présente un dispositif à ressort (16) agissant en permanence sur l'élément de soupape (6) dans la direction d'ouverture, dispositif à ressort qui est réglable de manière variable en termes de sa force de rappel, une modification de la sensibilité d'inversion étant sans influence sur la course de déplacement maximale possible de l'élément de soupape (6) et pouvant être effectuée exclusivement par une modification de la force de rappel du dispositif à ressort (16), et en ce qu'un canal de commande (37) est formé dans le boîtier de soupape (1), canal qui contourne l'élément de soupape (6) en position fermée à la manière d'un canal de dérivation et communique d'une part avec la section de canal côté entrée et d'autre part avec la section de canal côté sortie du canal d'alimentation (4), l'élément de rappel (54) étant formé par un élément de fermeture (54) placé sur le canal de régulation (37) et qui, dans la position non actionnée, prend une position fermée interdisant un passage de fluide à travers le canal de régulation (37) et, dans la position actionnée, prend une position de libération permettant un passage de fluide.

2. Soupape de sûreté selon la revendication 1, caractérisée en ce que le dispositif à ressort (16) agit entre l'élément de soupape (6) et un élément de réglage (18) mobile par rapport au boîtier de soupape (1), diverses précontraintes de l'élément de soupape (6) étant imposées en fonction de la position de l'élément de réglage (18).

3. Soupape de sûreté selon la revendication 2, caractérisée en ce que l'élément de réglage (18) est une vis de réglage.

4. Soupape de sûreté selon l'une des revendications 1 à 3, caractérisée en ce que le dispositif à ressort (16) est constitué d'au moins un ressort hélicoïdal travaillant en compression.

5. Soupape de sûreté selon l'une des revendications 1 à 4, caractérisée en ce que le dispositif de régulation (55) présente, en plus du premier dispositif à ressort (16) agissant dans la direction d'ouverture, un deuxième dispositif à ressort (28) agissant en permanence sur l'élément de soupape (6) dans la direction de fermeture.

6. Soupape de sûreté selon la revendication 5, caractérisée en ce que le deuxième dispositif à ressort (28) s'appuie entre l'élément de soupape (6) et un élément à vis (34) vissé dans le boîtier de soupape (1), l'élément à vis (34) présentant un canal de passage qui forme l'admission (P).

7. Soupape de sûreté selon la revendication 5 ou 6, caractérisée en ce que l'élément de soupape (6) est serré de manière coaxiale entre les deux dispositifs à ressort (16, 28).

8. Soupape de sûreté selon l'une des revendications 5 à 7, caractérisée en ce que la force de rappel d'ouverture du premier dispositif à ressort (16) est supérieure à la force de rappel de fermeture du deuxième dispositif à ressort (28).

9. Soupape de sûreté selon l'une des revendications 1 à 8, caractérisée en ce que l'élément de soupape (6) est monté mobile axialement dans un chambre de réception (5) formée dans le canal d'alimentation (4) et divise celle-ci en une section d'arrivée reliée à l'admission (P) et une section de départ (8) reliée à la sortie (A).

10. Soupape de sûreté selon l'une des revendications 1 à 9, caractérisée en ce que l'élément de fermeture (42) est précontraint dans la position de fermeture par un dispositif à ressort (43).

11. Soupape de sûreté selon l'une des revendications 1 à 10, caractérisée en ce qu'un poussoir de manoeuvre (46) dépassant depuis le boîtier de soupape (1) se met en prise sur l'élément de fermeture (42).

12. Soupape de sûreté selon l'une des revendications 1 à 11, caractérisée en ce que l'élément de soupape (6) est un élément de soupape à siège.

13. Soupape de sûreté selon l'une des revendications 1 à 12, caractérisée en ce que des rainures d'écoulement continues axialement (19) sont formées sur la périphérie extérieure de l'élément de soupape (6), rainures à travers lesquelles l'air comprimé s'écoule quand l'élément de soupape (6) est ouvert, en passant sur le côté de celui-ci.
